# EUROPEAN PATENT SPECIFICATION

(11) **EP 3 997 979 B1**
(45) Date of publication and mention of the grant of the patent: **23.08.2023**
(21) Application number: 21206200.4
(22) Date of filing: 03.11.2021
(51) Int. Cl.: A01M 29/00, A01M 29/10, A01M 29/16, A01M 29/18

(54) **SOLAR-POWERED GROUND PLUG REPELLING DEVICE**
SOLARBETRIEBENE ABWEHRVORRICHTUNG MIT BODENSTECKER
DISPOSITIF DE RÉPULSION DE PRISE DE TERRE ALIMENTÉ PAR L'ÉNERGIE SOLAIRE

(30) Priority: 04.11.2020 CN 202022515689 U
(43) Date of publication of application: 18.05.2022
(73) Proprietor: Luo, Jieping, Shenzhen, Guangdong (CN)
(72) Inventor: MIAO, Yuxia, Hanzhong City, Shanxi Province (CN)
(74) Representative: Viering, Jentschura & Partner mbB Patent- und Rechtsanwälte

(56) References cited:
- CN-U- 210 035 335
- CN-U- 210 929 347
- CN-U- 211 129 549

## Description

### FIELD OF THE DISCLOSURE

The present disclosure relates to the technical field of snakes and rats repelling devices, in particular to a solar-powered repelling device for repelling snakes, rats and other animals.

### BACKGROUND OF THE DISCLOSURE

CN 210 035 335 U and CN 211 129 549 U disclose various solar-powered ground plug repelling devices having a casing and a ground socket. In order to prevent small animals such as snakes and rats from staying on the grass around the house, a common method is to set up repellents on the lawn that can emit sound, light and other repelling signals. Such repellents generally include casings for circuit boards and solar panels, and the plug-in tube used to fix the drive. In order to reduce the volume of the casing as much as possible, some components or parts need to be set in the plug-in tube, therefore, the circuit board and the electrical parts in the plug-in tube need to be connected by wires, which is equivalent to connecting the two ends of the wire with the outer casing and the ground pipe, so that the bottom housing and the ground pipe cannot be disassembled into two separate parts. Therefore, they cannot be packaged separately, which increases the packaging volume. In the process of distance transportation, the logistics cost is increased. In addition, when the two ends of the wire pass through the casing and the ground pipe, it is necessary to set the threading hole, and the threading hole is difficult to seal, so the current ground plug drive is difficult to waterproof and moisture-proof, and the service life is shorter.

### SUMMARY OF THE DISCLOSURE

In order to overcome the shortcomings of the prior art, the purpose of the present invention is to provide a solar-powered ground plug repelling device that is easy to disassemble and assemble.

In order to achieve the aforementioned purpose, the technical solution of the present invention is to provide a solar-powered ground plug repelling device, comprising: a casing assembled by a face cover and a bottom housing, a PCBA (Printed Circuit Board Assembly) arranged in the casing, and a ground pipe, wherein a sliding groove assembly is provided on a surface of the bottom housing connected with the ground pipe and comprises two sliding grooves parallel to each other; a sliding rail assembly is provided on an end of the ground pipe connected to the bottom housing and comprises two sliding rails respectively movably connected to the two slide grooves, two electrode elastic sheets connected to the PCBA are provided in the casing, a connecting surface of the electrode elastic sheet protrudes from a perforation in a bottom plate of the bottom housing; and the ground plug repelling device further comprises two electrode thimbles connected with the sliding rail assembly, and an end of the electrode thimble is exposed from a surface of the slide rail assembly.

In a preferred embodiment, the sliding groove assembly further comprises two longitudinal barrier strips parallel to each other, and a transverse baffle whose ends are respectively perpendicularly connected to one end of the two longitudinal barrier strips, wherein the sliding groove assembly is integrally formed and has a U-shape.

In a preferred embodiment, the two sliding grooves are respectively arranged in inner sides of the two longitudinal barrier strips, the connecting surface of the electrode elastic sheet is located between the two longitudinal barrier strips.

In a preferred embodiment, inner sides of free ends of the two longitudinal barrier strips are both provided with an introduction slope connected with the sliding groove.

In a preferred embodiment, the sliding rail assembly further comprises a square frame body, a cover plate embedded in the square frame body, wherein the two sliding rails are respectively arranged on both sides of an upper surface of the square frame body, and the sliding rails and the square frame body are integrally formed.

In a preferred embodiment, outer sides of front ends of the two sliding rails are both provided with insertion slopes, and the two sliding rails are respectively embedded in the two sliding grooves.

In a preferred embodiment, the two electrode thimbles are vertically connected to the cover plate, upper ends of the electrode thimbles are exposed from a through hole in an upper surface of the cover plate, and lower ends of the electrode thimbles are located in the ground pipe.

In a preferred embodiment, two ends of a rear frame of the square frame respectively extend outward to form a block portion for preventing the square frame from being reversed, and the block portion and the rear frame are integrally formed.

In a preferred embodiment, a buzzer is further arranged in the ground pipe, and ends of the two electrode thimbles located in the ground pipe are connected with the buzzer.

In a preferred embodiment, a battery compartment is arranged in the bottom housing, an opening of the battery compartment is located in the bottom plate, and a waterproof ring and a battery compartment cover detachably connected with the bottom housing are arranged at the opening.

Beneficial technical effects of the present invention are as follows. With the structure of the present invention, the bottom housing and the ground pipe are detachably connected through the sliding groove assembly and the sliding rail assembly, the sliding rail assembly is fixedly connected to the ground pipe, and the sliding groove assembly is fixedly connected to the bottom housing. Therefore, the bottom housing and the ground pipe are easy to disassemble and assemble. The electrical components in the ground pipe and the PCBA in the casing are electrically connected through the electrode thimbles and the electrode elastic sheets. Compared with the existing similar products, the casing and the ground pipe can be disassembled into two independent parts, which is convenient for packaging, reducing the packaging volume, and long-distance transportation is beneficial to reducing logistics costs.

### BRIEF DESCRIPTION OF THE DRAWINGS

FIG. 1 is a perspective view of an embodiment of the present disclosure.
FIG. 2 is an exploded view of an embodiment of the present disclosure.
FIG. 3 is an assembly diagram of the casing and the sliding groove assembly of the embodiment of the present disclosure.
FIG. 4 is an assembly diagram of the ground pipe and slide rail assembly of the embodiment of the present disclosure.
FIG. 5 is a longitudinal sectional view of an embodiment of the present disclosure.
FIG. 6 is a schematic diagram of assembling the ground pipe and the casing according to the embodiment of the present disclosure.

### DETAILED DESCRIPTION OF THE EXEMPLARY EMBODIMENTS

In order to enable those skilled in the art to better understand the solution of the present disclosure, the present disclosure will be further described in detail below with reference to the accompanying drawings and embodiments.

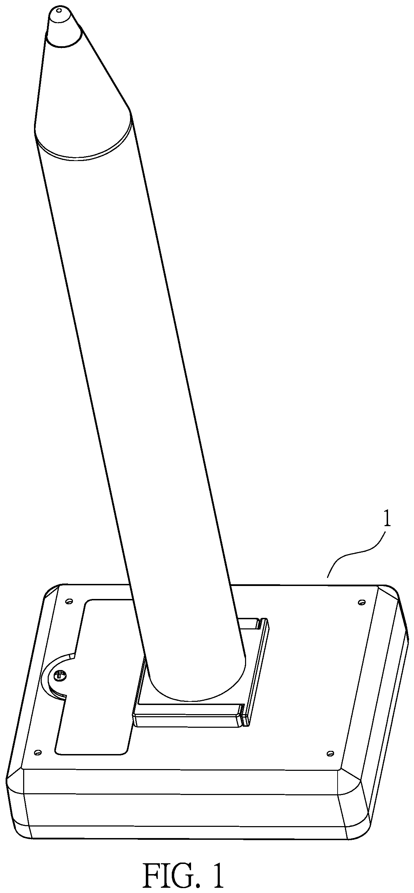

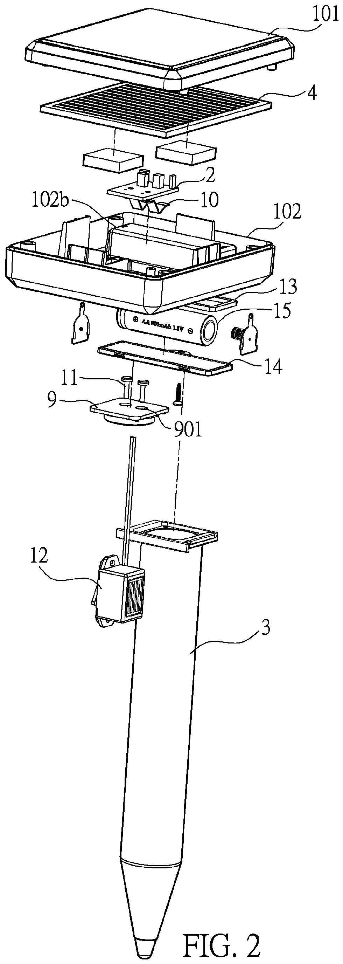

As shown in FIGS. 1 and 2, the present invention provides a solar-powered ground plug repelling device, which includes a casing 1. The casing 1 is assembled by a face cover 101 and a bottom housing 102, a PCBA 2 arranged in the casing 1, and a ground pipe 3 connected with the casing. The face cover 101 is made of a transparent material, a solar panel 4 is arranged in the face cover, and the solar panel 4 is connected with the PCBA.

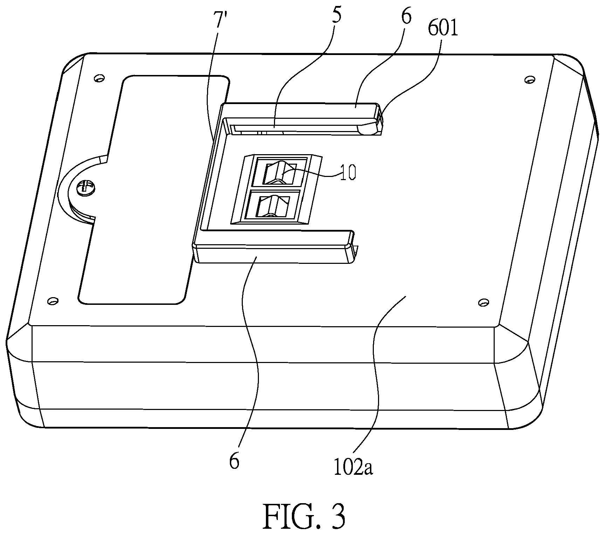

As shown in FIG. 3, a sliding groove assembly is provided on the surface of the bottom housing 102 connected to the ground pipe 3, and the sliding groove assembly includes two sliding grooves 5 parallel to each other, and the sliding groove assembly further includes two longitudinal barrier strips 6 parallel to each other and a transverse baffle 7' with two ends perpendicularly connected to one end of the two longitudinal barrier strips 6. The sliding groove assembly is integrally formed and has a U-shape. Here, the two sliding grooves 5 are respectively provided in the inner sides of the two longitudinal barrier strips 6. The inner sides of the free ends of the two longitudinal barrier strips 6 are both provided with an introduction slope 601 connected to the sliding groove 5.

The sliding groove assembly and the bottom housing 102 are integrally formed.

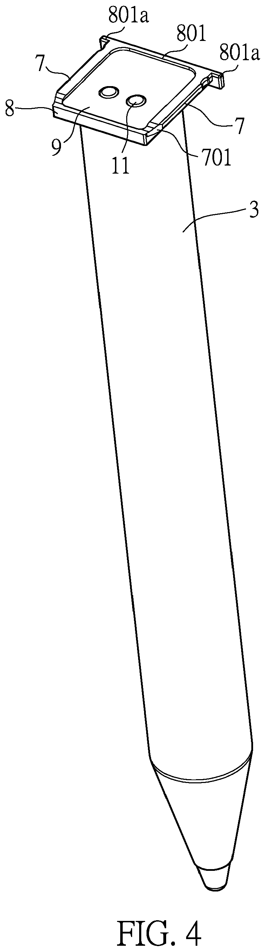

As shown in FIG. 4, a sliding rail assembly is provided on the end of the ground pipe 3 connected to the bottom housing 102. The sliding rail assembly includes two sliding rails 7 movably connected to two sliding grooves 5, respectively. The sliding rail assembly further includes a square frame 8 and a cover plate 9 embedded in the square frame 8. Here, the two sliding rails 7 are respectively provided on both sides of the upper surface of the square frame 8 and the sliding rails 7 and the square frame 8 is integrally formed.

Here, the movable connection between the sliding groove 5 and the sliding rail 7 means that the sliding rail 7 can slide relative to the sliding groove 5 during assembly or disassembly.

In this embodiment, the cover plate 9 and the square frame 8 can be detachably connected, that is, the two can be fixedly connected by screws, but can be detached. The cover plate 9 is used to close the open end of the ground pipe 3.

In order to be compatible with the introduction slope 601 of the free end of the longitudinal barrier strip 6 and to facilitate the combination of the sliding groove assembly and the sliding rail assembly to embody the assembly of the casing 1 and the ground pipe 3, the outer sides of the front ends of the two sliding rails 7 are both provided with an insertion slope 701, and the inclination angle of the introduction slope 601 is adapted to the insertion slope 701. After assembly, the two sliding rails 7 are embedded in the two sliding grooves 5 respectively.

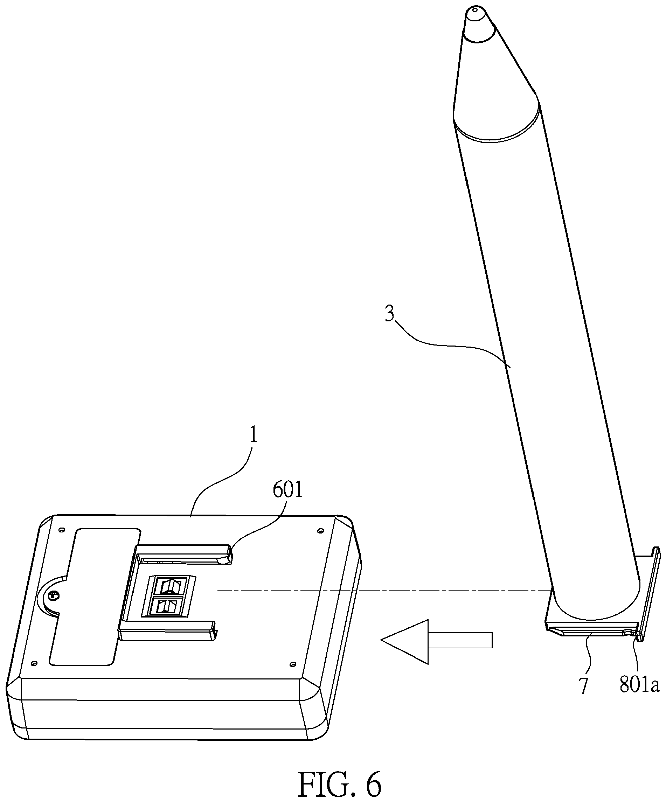

The two ends of the rear frame 801 of the square frame 8 respectively extend outward to form a block portion 801a for preventing the square frame from being reversed. The block portion 801a and the rear frame 801 are integrally formed with this structure. During installation, the two sliding rails 7 can only be inserted into the introduction slope 601 of the two slide grooves 5 through the end of the insertion slope 701 provided thereon, as shown in FIG. 6.

As shown in FIGS. 1 and 3, in order to be compatible with the detachable connection structure of the casing 1 and the ground pipe 3, two electrode elastic sheets 10 connected to the PCBA 2 are provided in the casing 1. The connecting surface protrudes from the perforation in the bottom plate 102a of the bottom housing 102.

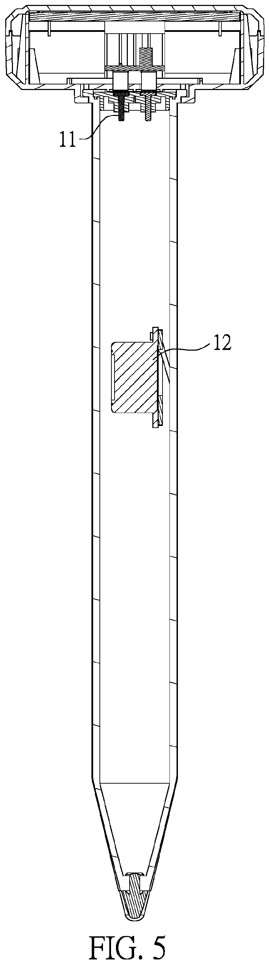

In order to connect with the electrode elastic sheets 10, it also includes two electrode thimbles 11 connected with the ground pipe 3, and the end of the electrode thimble 11 is exposed from the surface of the sliding rail assembly. Specifically, the two electrode thimbles 11 are vertically connected to the cover plate 9, the upper ends of the electrode thimbles 11 are exposed from the through hole 901 in the upper surface of the cover plate 9, and the lower ends of the electrode thimbles are located in the ground pipe 3, as shown in FIG. 5.

After the assembly is completed, the two electrode elastic sheets 10 are respectively connected to the two electrode thimbles 11 for the electrical signal transmission between the PCBA 2 in the casing 1 and the electrical components in the ground pipe 3.

As shown in FIG. 3, after assembling, the connecting surface of the electrode elastic sheet 10 is located between the two longitudinal barrier strips 6.

As shown in FIG. 2, similar to the existing product, the ground pipe 3 is also provided with a buzzer 12, and the ends of the two electrode thimbles 11 located in the ground pipe 3 are connected with the buzzer 12.

The bottom housing 102 is provided with a battery compartment 102b, the opening of the battery compartment is located in the bottom plate 102a, a waterproof ring 13 and a battery compartment cover 14 detachably connected to the bottom housing 102 are provided at the opening, and the battery 15 is located in the battery compartment. Specifically, the battery compartment cover 14 and the bottom plate 102a can be detachably connected to facilitate battery replacement, and the waterproof ring 13 is used to seal the junction of the battery compartment cover 14 and the bottom plate 102a.

In summary, the bottom housing 102 and the ground pipe 3 are detachably connected through the sliding groove assembly and the sliding rail assembly, the sliding rail assembly is fixedly connected to the ground pipe 3, and the sliding groove assembly is fixedly connected to the bottom housing 102, so that the bottom housing 102 and the ground pipe 3 are easily disassembled and assembled. The electrical components in the ground pipe 3 and the PCBA2 in the casing 1 are electrically connected through the electrode thimble 11 and the electrode elastic sheet 10. With this structure, the casing 1 and the ground pipe 3 can be disassembled into two independent parts, which facilitates packaging and reduces packaging volume, thereby helping to save the logistics cost of long-distance transportation.

In the above description, it should be noted that the terms "assembled", "connected", "connecting" and other corresponding terms should be understood in a broad sense. For example, it can be a fixed connection, a detachable connection, or an integral connection. It can be a direct connection, can also be an indirect connection through an intermediate medium, and can be a connection between two components.

## Claims

1. A solar-powered ground plug repelling device, comprising:
a casing (1) assembled by a face cover (101) and a bottom housing (102);
a PCBA (Printed Circuit Board Assembly; (2)) arranged in the casing; and
a ground pipe (3),
wherein a sliding groove assembly is provided on a surface of the bottom housing connected with the ground pipe and includes: two sliding grooves (5) parallel to each other,
wherein a sliding rail assembly is provided on an end of the ground pipe connected to the bottom housing and includes two sliding rails respectively movably connected to the two slide grooves,
wherein two electrode elastic sheets (10) connected to the PCBA are provided in the casing, and a connecting surface of the electrode elastic sheet protrudes from a perforation in a bottom plate of the bottom housing, and
wherein the ground plug repelling device further comprises two electrode thimbles (11) connected with the sliding rail assembly, and an end of the electrode thimble is exposed from a surface of the slide rail assembly.

2. The solar-powered ground plug repelling device according to claim 1, wherein the sliding groove assembly further comprises:
two longitudinal barrier strips (6) parallel to each other; and
a transverse baffle whose ends are respectively perpendicularly connected to one end of the two longitudinal barrier strips,
wherein the sliding groove assembly is integrally formed and has a U-shape.

3. The solar-powered ground plug repelling device according to claim 2, wherein the two sliding grooves are respectively arranged in inner sides of the two longitudinal barrier strips, and the connecting surface of the electrode elastic sheet is located between the two longitudinal barrier strips.

4. The solar-powered ground plug repelling device according to claim 3, wherein inner sides of free ends of the two longitudinal barrier strips are both provided with an introduction slope connected with the sliding grooves.

5. The solar-powered ground plug repelling device according to claim 1,
wherein the sliding rail assembly further comprises a square frame body (8), a cover plate (9) embedded in the square frame body, and
wherein the two sliding rails are respectively arranged on both sides of an upper surface of the square frame body, and the sliding rails and the square frame body are integrally formed.

6. The solar-powered ground plug repelling device according to claim 5, wherein outer sides of front ends of the two sliding rails are both provided with insertion slopes, and the two sliding rails are respectively embedded in the two sliding grooves.

7. The solar-powered ground plug repelling device according to claim 5, wherein the two electrode thimbles are vertically connected to the cover plate, upper ends of the electrode thimbles are exposed from a through hole in an upper surface of the cover plate, and lower ends of the electrode thimbles are located in the ground pipe.

8. The solar-powered ground plug repelling device according to claim 6, wherein two ends of a rear frame of the square frame respectively extend outward to form a block portion for preventing the square frame from being reversed, and the block portion and the rear frame are integrally formed.

9. The solar-powered ground plug repelling device according to claim 7, wherein a buzzer is further arranged in the ground pipe, and ends of the two electrode thimbles located in the ground pipe are connected with the buzzer.

10. The solar-powered ground plug repelling device according to claim 1, wherein a battery compartment (102b) is arranged in the bottom housing, an opening of the battery compartment is located in the bottom plate, and a waterproof ring and a battery compartment cover detachably connected with the bottom housing are arranged at the opening.

## Patentansprüche

1. Solarbetriebene Bodenabwehrvorrichtung umfassend:
ein Gehäuse (1), das aus einer Frontabdeckung (101) und einem Bodengehäuse (102) zusammengesetzt ist; eine PCBA (Printed Circuit Board Assembly (2)), die in dem Gehäuse angeordnet ist; und ein Erdungsrohr (3),
- wobei eine Gleitnutenanordnung auf einer Oberfläche des Bodengehäuses vorgesehen ist, die mit dem Erdungsrohr verbunden ist, und Folgendes umfasst: zwei zueinander parallele Gleitnuten (5),
- wobei eine Gleitschienenanordnung an einem mit dem Bodengehäuse verbundenen Ende des Erdungsrohrs vorgesehen ist und zwei Gleitschienen umfasst, die jeweils beweglich mit den beiden Gleitnuten verbunden sind,
- wobei zwei mit der PCBA verbundene elastische Elektrodenplatten (10) in dem Gehäuse vorgesehen sind und eine Verbindungsfläche der elastischen Elektrodenplatte aus einer Perforation in einer Bodenplatte des Bodengehäuses herausragt; und
- wobei die Solarbetriebene Bodenabwehrvorrichtung ferner zwei Elektrodenkauschen (11) umfasst, die mit der Gleitschienenanordnung verbunden sind, und ein Ende der Elektrodenkausch aus einer Oberfläche der Gleitschienenanordnung herausragt.

2. Solarbetriebene Bodenabwehrvorrichtung Anspruch 1, wobei die Gleitschienenanordnung ferner umfasst: zwei zueinander parallele Längssperrstreifen (6); und ein quer verlaufendes Ablenkblech, dessen Enden jeweils senkrecht mit einem Ende der beiden Längssperrstreifen verbunden sind, wobei die Gleitschienenanordnung einstückig ausgebildet ist und eine U-Form aufweist.

3. Solarbetriebene Bodenabwehrvorrichtung nach Anspruch 2, wobei die beiden Gleitnuten jeweils an den Innenseiten der beiden Längssperrstreifen angeordnet sind und die Verbindungsfläche der elastischen Elektrodenplatten zwischen den beiden Längssperrstreifen angeordnet sind.

4. Solarbetriebene Bodenabwehrvorrichtung nach Anspruch 3, wobei die Innenseiten der freien Enden der beiden Längssperrstreifen beide mit einer Einführungsschräge versehen sind, die mit den Gleitnuten verbunden ist.

5. Solarbetriebene Bodenabwehrvorrichtung nach Anspruch 1, wobei die Gleitschienenanordnung ferner einen quadratischen Rahmenkörper (8) und eine in den quadratischen Rahmenkörper eingebettete Abdeckplatte (9) umfasst, und wobei die beiden Gleitschienen jeweils auf beiden Seiten einer oberen Fläche des quadratischen Rahmenkörpers angeordnet sind und die Gleitschienen und der quadratische Rahmenkörper einstückig ausgebildet sind.

6. Solarbetriebene Bodenabwehrvorrichtung nach Anspruch 5, wobei die Außenseiten der vorderen Enden der beiden Gleitschienen beide mit Einführungsschrägen versehen sind und die beiden Gleitschienen jeweils in die beiden Gleitnuten eingebettet sind.

7. Solarbetriebene Bodenabwehrvorrichtung nach Anspruch 5, wobei die beiden Elektrodenkauschen vertikal mit der Abdeckplatte verbunden sind, die oberen Enden der Elektrodenkauschen aus einem Durchgangsloch in einer oberen Fläche der Abdeckplatte herausragen und die unteren Enden der Elektrodenkauschen im Erdungsrohr angeordnet sind.

8. Solarbetriebene Bodenabwehrvorrichtung nach Anspruch 6, wobei sich zwei Enden eines hinteren Rahmens des quadratischen Rahmens jeweils nach außen erstrecken, um einen Blockabschnitt zu bilden, der verhindert, dass der quadratische Rahmen umgedreht wird, und der Blockabschnitt und der hintere Rahmen einstückig ausgebildet sind.

9. Solarbetriebene Bodenabwehrvorrichtung nach Anspruch 7, wobei im Erdungsrohr außerdem ein Summer angeordnet ist und die Enden der beiden im Erdungsrohr befindlichen Elektrodenkauschen mit dem Summer verbunden sind.

10. Solarbetriebene Bodenabwehrvorrichtung nach Anspruch 1, wobei ein Batteriefach (102b) in dem Bodengehäuse angeordnet ist, eine Öffnung des Batteriefachs in der Bodenplatte angeordnet ist und ein wasserdichter Ring und eine Batteriefachabdeckung, die lösbar mit dem Bodengehäuse verbunden ist, an der Öffnung angeordnet sind.

## Revendications

1. Un dispositif de répulsion de prise de terre à énergie solaire, comprenant :
un boîtier (1) assemblé par un couvercle avant (101) et un carter inférieur (102);
un PCBA (Ensemble de Carte de Circuit Imprimé, (2)) agencé dans le boîtier ; et un tuyau mis à la terre (3),
dans lequel un ensemble de rainures coulissantes est prévu sur une surface du carter inférieur relié au tuyau mis à la terre et comprend : deux rainures coulissantes(5) parallèles les unes aux autres,
dans lequel un ensemble de rails coulissants est prévu sur une extrémité du tuyau mis à la terre relié au carter inférieur et comprend deux rails coulissants respectivement reliés de manière mobile aux deux rainures coulissantes,
dans lequel deux feuilles élastiques d'électrode (10) connectées au PCBA sont fournies dans le boîtier, et une surface de connexion de la feuille élastique d'électrode dépasse d'une perforation dans une plaque inférieure du carter inférieur, et
dans lequel le dispositif de répulsion de prise de terre comprend en outre deux cosses d'électrode (11) reliées à l'ensemble de rails coulissants, et une extrémité de la cosse d'électrode est exposée à partir d'une surface de l'ensemble de rails coulissants.

2. Le dispositif de répulsion de prise de terre à énergie solaire selon la revendication 1, dans lequel l'ensemble de rainures coulissantes comprend en outre :
deux bandes barrières longitudinales (6) parallèles entre les unes aux autres ; et un chicane transversal dont les extrémités sont respectivement raccordées perpendiculairement à une extrémité des deux bandes barrières longitudinales,
dans lequel l'ensemble de rainures coulissantes sont formés d'un seul tenant et en forme de U.

3. Le dispositif de répulsion de prise de terre à énergie solaire selon la revendication 2, dans lequel les deux rainures coulissantes sont respectivement agencées dans les côtés intérieurs des deux bandes barrières longitudinales, et la surface de connexion de la feuille élastique d'électrode est située entre les deux bandes barrières longitudinales.

4. Le dispositif de répulsion de prise de terre à énergie solaire selon la revendication 3, dans lequel les côtés intérieurs des extrémités libres des deux bandes barrières longitudinales sont tous deux pourvus d'une pente d'introduction reliée aux rainures coulissantes.

5. Le dispositif de répulsion de prise de terre à énergie solaire selon la revendication 1, dans lequel l'ensemble de rails coulissants comprend en outre un corps de cadre carré (8), une plaque de couvrement (9) encastrée dans le corps de cadre carré, et
dans lequel les deux rails coulissants sont respectivement agencés sur les deux côtés d'une surface supérieure du corps de cadre carré, et les rails coulissants et le corps de cadre carré sont formés d'un seul tenant.

6. Le dispositif de répulsion de prise de terre à énergie solaire selon la revendication 5, dans lequel les côtés extérieurs des extrémités avant des deux rails coulissants sont tous deux pourvus de pentes d'insertion, et les deux rails coulissants sont respectivement encastrés dans les deux rainures coulissantes.

7. Le dispositif de répulsion de prise de terre à énergie solaire selon la revendication 5, dans lequel les deux cosses d'électrode sont connectées verticalement à la plaque de couverture, les extrémités supérieures des cosses d'électrode sont exposées à partir d'un trou traversant dans une surface supérieure de la plaque de couverture, et les extrémités inférieures des cosses d'électrodes sont situées dans le tuyau mis à la terre.

8. Le dispositif de répulsion de prise de terre à énergie solaire selon la revendication 6, dans lequel deux extrémités d'un cadre arrière du cadre carré s'étendent respectivement vers l'extérieur pour former une partie de bloc pour empêcher l'inversion du cadre carré, et la partie de bloc et le cadre arrière sont formés d'un seul tenant.

9. Le dispositif de répulsion de prise de terre à énergie solaire selon la revendication 7, dans lequel un ronfleur est en outre agencé dans le tuyau mis à la terre, et les extrémités des deux cosses d'électrode situées dans le tuyau mis à la terre sont connectées au ronfleur.

10. Le dispositif de répulsion de prise de terre à énergie solaire selon la revendication 1, dans lequel un compartiment de batterie (102b) est agencé dans le carter inférieur, une ouverture du compartiment de batterie est située dans la plaque inférieure, et un anneau étanche et un couvercle de compartiment de batterie relié de manière amovible au carter inférieur sont agencés au niveau de l'ouverture.
